# EUROPÄISCHE PATENTSCHRIFT

(11) **EP 0 718 335 B1**
(45) Veröffentlichungstag und Bekanntmachung des Hinweises auf die Patenterteilung: **17.07.2002**
(21) Anmeldenummer: 95119457.0
(22) Anmeldetag: 11.12.1995
(51) Int. Cl.: C08G 18/66, C08G 18/32

(54) **Thermoplastische Polyurethane mit verbessertem Schmelzefluss**
Thermoplastic polyurethanes with improved melt-flow properties
Polyuréthanes thermoplastiques ayant une fluidité à l'état fondu améliorée

(30) Priorität: 23.12.1994 DE 4446332
(43) Veröffentlichungstag der Anmeldung: 26.06.1996
(73) Patentinhaber: BAYER AG, 51368 Leverkusen (DE)
(72) Erfinder: Pudleiner, Heinz, Dr., D-47800 Krefeld (DE); Hoppe, Hans-Georg, D-42799 Leichliggen (DE); Wagner, Joachim, Dr., D-51061 Köln (DE)

(56) Entgegenhaltungen:
- EP-A- 0 004 939
- EP-A- 0 080 031
- EP-A- 0 417 553
- EP-A- 0 556 758
- GB-A- 1 024 381
- US-A- 3 078 257
- CHEMICAL ABSTRACTS, vol. 89, no. 14, 2.Oktober 1978 Columbus, Ohio, US; abstract no. 111952u, SAKAGUCHI ET AL: "polyurethane elastomers" Seite 123; Spalte 1; XP002020346 & JP-A-53 030 695 (MITSUI NISSO URETHANE)

## Beschreibung

Die Erfindung betrifft thermoplastisch verarbeitbare Polyurethan-Elastomere mit verbessertem Verarbeitungsverhalten.

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPU's werden aus linearen Polyolen, meist Polyester oder Polyether, organischen Diisocyanaten und kurzkettigen Diolen (Kettenverlängerer) aufgebaut. Sie können kontinuierlich oder diskontinuierlich hergestellt werden. Als die bekanntesten Herstellverfahren werden das sogenannte Bandverfahren und das Extruderverfahren auch technisch genutzt.

Zur Einstellung der Eigenschaften können die Aufbaukomponenten in relativ breiten molaren Verhältnissen variiert werden. Bewährt haben sich molare Verhältnisse von Makrodiolen zu Kettenverlängerern von 1:1 bis 1:12. Hierdurch ergeben sich Produkte im Bereich von 70 Shore A bis 75 Shore D.

Zur Verbesserung des Verarbeitungsverhaltens ist - besonders bei Produkten zur Verarbeitung durch Extrusion - eine erhöhte Standfestigkeit und ein einstellbarer Schmelzefluß von großem Interesse. Dieser ist vom chemischen und morphologischen Bau der TPU's abhängig.

Die für ein verbessertes Verarbeitungsverhalten erforderliche Struktur wird in nach üblichen Verfahren hergestellten Produkten erst durch die Verwendung von Kettenverlängerungsmittelgemischen z.B. 1,4-Butandiol/1,6-Hexandiol, erreicht. Dadurch wird die Anordnung der Hartsegmente so stark gestört, daß nicht nur der Schmelzefluß verbessert, sondern gleichzeitig die thermisch-mechanischen Eigenschaften, z.B. Zugfestigkeit und Wärmestandfestigkeit, deutlich verschlechtert werden.

Thermoplastische Polyurethan-Elastomere mit aromatischen Alkoxy-Glykolen als Kettenverlängerungsmittel, z.B. 1,4-Bis-(2-hydroxyethoxy)-benzol, zeichnen sich durch hohe Wärmeformbeständigkeit, hohe Elastizität und niedrigen Druck- und Zugverformungsrest aus; ihr Verarbeitungsverhalten ist dagegen unbefriedigend, im wesentlichen verursacht durch einen ungleichmäßigen Schmelzefluß.

In der DE-OS 28 17 456 wird die Herstellung thermoplastischer Polyurethane aus linearen Polyolen, organischen Diisocyanaten und einem Gemisch zweier Glykole als Kettenverlängerungsmittel beschrieben. Zwar wird auf die Homogenität und Gelkörperfreiheit der z.B. auf einem Extruder hergestellten Produkte hingewiesen, jedoch auch auf die nachteilige Herabsetzung des Erweichungsbereiches.

In JP-A-53 030 695 werden TPUs unter Verwendung einer Kettenverlängerungsmittel-Mischung aus 1,4-Bis(2-hydroxyethoxy)benzol und 1,4-Butandiol im Verhältnis 80:20 offenbart. Dadurch wird eine verbesserte Härtung und Formtrennung ohne Bruch erreicht.

EP-A-4939 beschreibt TPUs unter Verwendung einer Mischung aus 85 bis 99 Gew.-% 1,4-Butandiol und 1 bis 15 Gew.-% mindestens eines speziellen Co-Kettenverlängerers, die sich leicht durch Extrusion und/oder Kalandrierung zu homogenen Schmelzen und Produkten mit glatter Oberfläche verarbeiten lassen.

Der Schmelzefluß von TPU's wird oft durch Zusatz von monofunktionellen Kettenreglern eingestellt, die das Molekulargewicht des Polymers nach oben begrenzen. Besonders hochmolekulare Produkte lassen sich so nicht herstellen.

Gegenstand der Erfindung sind thermoplastische Polyurethanelastomere erhältlich durch Umsetzung von
A) Diisocyanaten
B) Polyhydroxyverbindungen und/oder Polyaminen mit
C) als Kettenverlängerungsmittel Mischungen von
   C1) mit mindestens zwei Hydroxyalkyl-, Hydroxyalkoxy-, Aminoalkyl- und/oder Aminoalkoxyresten substituiertem Benzol, wobei die Reste gleich sind, und
   C2) einem Alkandiol aus der Gruppe bestehend aus 1,4-Butandiol, 1,6-Hexandiol, 1,8-Octandiol, 1,10-Decandiol und 1,12-Dodecandiol im Molverhältnis C1 zu C2 = 60 zu 40 bis 95 zu 5,
wobei die Kombination von 1,4-Bis-(2-hydroxyethoxy)-benzol und 1,4-Butandiol ausgeschlossen sein soll.

Der Schmelzefluß dieser TPU's kann durch Art und Menge des Kettenverlängerungsmittels C2) eingestellt werden ohne wesentliche Veränderung der mechanischen und thermischen Eigenschaften des Produktes. Der Zusatz monofunktioneller Kettenregler ist zwar möglich, aber nicht erforderlich zur Einstellung des Schmelzeflusses. Die Produkte schmelzen homogen, knötchen- und quellkörperfrei auf, sind auf Reaktionsextrudern herstellbar und besitzen verbesserte Extrusionseigenschaften.

Bei der Herstellung der erfindungsgemäßen Polyurethanelastomeren können übliche Katalysatoren verwendet werden, die die Polyurethanbildung beschleunigen, beispielsweise tertiäre Amine oder organische Metallverbindungen. Es ist auch möglich, zur Begrenzung des Molekulargewichts kleine Mengen monofunktioneller Verbindungen, bevorzugt 0,01 bis 7 Äquivalent-%, bezogen auf den NCO-Gehalt der Komponente A) einzusetzen. Ebenfalls können die üblichen Zusätze in Mengen von 0,1 bis 3 Gew.-% an Wachsen, phenolischen Antioxidantien, UV-Absorbern benutzt werden.

Die substituierten Benzole C1) sind solche, die zwei gleiche Substituenten tragen und zwar bevorzugt in 1,4-Stellung. Diese Substituenten besitzen entweder bevorzugt eine endständige Hydroxy- oder Aminogruppe, enthalten Alkyl- bzw. Alkylenreste mit 1 bis 4 Kohlenstoffatomen und können über Sauerstoff (Alkoxy) oder direkt (Alkyl) an den Benzolring gebunden sein. Besonders bevorzugte Verbindungen entsprechen der Formel

X-Alk-W-Ph-W-Alk-X,

worin
- X: OH oder NH₂,
- Alk: einen Alkylenrest mit 1 bis 4 Kohlenstoffatomen,
- W: eine einfache chemische Bindung oder ein Sauerstoffatom und
- Ph: den Benzolring bedeuten.

Beispiele sind 1,4-Bis-(2-hydroxyethoxy)-benzol, 1,3-Bis-(2-hydroxyethoxy)-benzol, 1,2-Bis-(2-hydroxyethoxy)-benzol, 1,4-Bis-(hydroxymethyl)-benzol und 1,2-Bis-(hydroxymethyl)-benzol.

Die Alkandiole C2) sind ausgewählt aus der Gruppe bestehend aus 1,4-Butandiol, 1,6-Hexandiol, 1,8-Octandiol, 1,10-Decandiol und 1,12-Dodecandiol.

Das Molverhältnis von C1) zu C2) ist 60 zu 40 bis 95 zu 5, bevorzugt 75 zu 25 bis 90 zu 10.

Diisocyanate sind beispielsweise aliphatische, cycloaliphatische, araliphatische, heterocyclische und aromatische Diisocyanate. Beispiele sind aliphatische Diisocyanate, wie Hexamethylendiisocyanat, cycloaliphatische Diisocyanate, wie Isophorondiisocyanat, 1,4-Cyclohexandiisocyanat, 1-Methyl-2,4- und -2,6-cyclohexandiisocyanat sowie die entsprechenden Isomerengemische, 4,4'-, 2,4'- und 2,2'-Dicyclohexylmethandiisocyanat sowie die entsprechenden Isomerengemische und vorzugsweise aromatische Diisocyanate, wie 2,4-Toluylendiisocyanat, Gemische aus 2,4- und 2,6-Toluylendiisocyanat, 4,4'-, 2,4'- und 2,2'-Diphenylmethandiisocyanat, Gemische aus 2,4'- und 4,4'-Diphenylmethandiisocyanat, urethanmodifizierte flüssige 4,4'- und/oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, Dicyclohexylmethandiisocyanat, Isophorondiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat.

Den Diisocyanaten können bis zu 15 % Polyisocyanate (berechnet auf Diisocyanat) zugesetzt werden, höchstens jedoch soviel, daß das Polymer thermoplastisch verarbeitbar bleibt. Beispiele für Polyisocyanate sind Triphenylmethan-4,4',4"-triisocyanat und Polyphenyl-polymethylen-polyisocyanate.

Als Polyhydroxyverbindungen B) können im wesentlichen lineare Polyole, Polyester, Polyether, Polycarbonate oder Gemische davon verwendet werden.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyldiethanolamine, beispielsweise N-Methyldiethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Die im wesentlichen linearen Polyetherole besitzen vorzugsweise Molekulargewichte von 500 bis 5000. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernsteinsäure-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischung untereinander verwendet werden.

Geeignet sind ferner Ester der Kohlensäure mit den genannten Diolen, insbesondere solchen mit 4 bis 8 Kohlenstoffatomen, wie Butandiol-1,4 und/oder Hexandiol-1,8, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-butandiol-1,4-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 5000.

Als Polyamine B) können amin-terminierte Polyether des Handels, wie sie z.B. unter Jeffamine® von Texaco Chemical Co. bekannt sind, verwendet werden. Jeffamine® enthalten als wiederkehrende Einheit Ethylenoxid, Propylenoxid oder Tetramethylenoxid. Sie haben Molekulargewichte von 400 bis 8000.

Als Kettenverlängerungsmittel wird bevorzugt ein Gemisch von 90 bis 75 Mol-%, 1,4-Bis-(2-hydroxyethoxy)-benzol und 10 bis 25 Mol-% 1,6-Hexandiol, 1,8-Octandiol, 1,10-Decandiol oder 1,12-Dodecandiol verwendet.

Die Alkandiole C2) können bis zu 15 % (berechnet auf Kettenverlängerer) eines Triols mit einem Molekulargewicht von bis zu 500 enthalten. Beispiele sind Glycerin, Trimethylolpropan und deren niedermolekularen Alkylenoxidaddukte sowie 1,2,6-Hexantriol.

Geeignete Katalysatoren, welche insbesondere die Reaktion zwischen den NCO-Gruppen der Diisocyanate und den Hydroxylgruppen der Aufbaukomponenten beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0005 bis 0,1 Teilen pro 100 Teilen Polyhydroxyverbindung eingesetzt.

Die Kettenabbrecher können in Mengen von 0,01 bis 7 Äquivalent-% bezogen auf den NCO-Gruppengehalt der Komponente A) eingesetzt werden. Bevorzugt wird kein Kettenregler benutzt.

Als Additive können 0,1 bis 3 Gew.-% (bezogen auf die Gesamtmenge aller Komponenten) Wachse, Antioxidantien und/oder UV-Absorber miteingesetzt werden. Bevorzugt werden Mischungen von Stabilisatoren eingesetzt.

Als Antioxidantien können alle hierfür bekannten Produkte (vgl. EP-A 12 343) eingesetzt werden. Bevorzugt sind Antioxidantien auf der Basis sterisch gehinderter Phenole, z.B. 2,6-Di-t-butyl-4-methyl-phenol und Pentaerythrityltetrakis-3-(3,5-di-t-butyl-4-hydroxyphenyl)-propionat (Irganox® 1010, der Firma Ciba Geigy).

Neben Katalysatoren können den Aufbaukomponenten auch Hilfsmittel und/oder Zusatzstoffe einverleibt werden. Genannt seien beispielsweise Gleitmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel.

Verstärkungsmittel sind insbesondere faserartige Verstärkungsstoffe wie z.B. anorganische Fasern, die nach dem Stand der Technik hergestellt werden und auch mit einer Schlichte beaufschlagt sein können.

Nähere Angaben über die obengenannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-A 29 01 774 zu entnehmen.

Zur Herstellung der TPU können die Aufbaukomponenten, gegebenenfalls in Gegenwart von Katalysatoren, Hilfsmitteln und/oder Zusatzstoffen in solchen Mengen zur Reaktion gebracht werden, daß das Äquivalenzverhältnis von NCO-Gruppen zur Summe der NCO-reaktiven Gruppen, insbesondere der OH-Gruppen der Aufbaukomponenten 0,9:1 bis 1,20:1, vorzugsweise 0,95:1 bis 1,10:1 beträgt.

Zur Herstellung von TPU's eignen sich die bekannten Mischaggregate, vorzugsweise die, die mit hoher Scherenergie arbeiten. Für die kontinuierliche Herstellung seien beispielhaft genannt Cokneter, vorzugsweise Extruder, wie z.B. Zweiwellenextruder und Busskneter, sowie das Mischkopf/Band-Verfahren.

Das erfindungsgemäße TPU kann z.B. auf einem Zweiwellenextruder dadurch hergestellt werden, daß man das Prepolymer im ersten Teil des Extruders herstellt und die Polyolzugabe und die Kettenverlängerung im zweiten Teil anschließt. Alternativ können die Aufbaukomponenten des Prepolymers außerhalb des Extruders in einem Mischkopf oder Düse gemischt, die Prepolymer-Reaktion dann im ersten Teil und die obengenannten anschließenden Schritte im zweiten Teil des Extruders durchgeführt werden. Weiterhin kann auch der gesamte Prepolymerschritt vor dem Extruder liegen. Das fertige Prepolymer wird dann mit dem Polyol und dem Restkettenverlängerer in den Extruder dosiert.

Bei einer anderen Ausführungsform wird aus Polyol und Diisocyanat in einem Kessel ein Voraddukt hergestellt, zu dem das Kettenverlängerungsgemisch gegeben wird. Anschließend wird bei 210 bis 240°C bis zur vollständigen Reaktion gerührt.

Erfindungsgemäß werden Kettenverlängerungsmittelgemische verwendet, in denen der Abstand zwischen den mit Isocyanatgruppen reagierenden funktionellen Hydroxylgruppen des Diols C2) auf das substituierte Benzol C1) abgestimmt ist. Es werden leichter fließende thermoplastische Polyurethane erhalten, wenn die Kettenlänge des Diols nicht zum Benzolderivat "paßt", d.h. entweder zu kurz oder zu lang ist. Man kann also durch richtige Wahl hochmolekulare TPU herstellen, ohne Kettenregler, und trotzdem guten Schmelzefluß gewährleisten.

Die erfindungsgemäßen thermoplastischen Polyurethane haben einen Schmelzefluß, der über die Kettenlänge des Diols C2) einstellbar ist. So werden z.B. mit 1,4-Bis-(2-hydroxyethoxy)-benzol als C1) und 1,6-Hexandiol oder 1,12-Dodecandiol als C2) leichter schmelzende Produkte erhalten, während mit 1,8-Octandiol etwas weniger gut schmelzende Produkte erhalten werden.

Die erfindungsgemäßen thermoplastischen Polyurethane haben ausgezeichnete mechanische Eigenschaften. Die Bruchdehnungen liegen immer oberhalb von 450 % und überschreiten in den meisten Fällen sogar 600 %. Die bleibende Dehnung nach Streckung der Probe auf 200 % ist sehr niedrig und unabhängig von der Art des eingesetzten Cokettenverlängerungsmittels. Für Anwendungen, bei denen Streifen oder Folien gedehnt werden ist dies eine besonders wichtige Eigenschaft, da sich der Formkörper fast bis zum Ausgangspunkt wieder zurückstellt.

Die erfindungsgemäßen thermoplastischen Polyurethane zeigen als Hauptvorteil eine sehr hohe Wärmeformbeständigkeit, gemessen als Erweichungstemperatur in der thermomechanischen Analyse (TMA). Selbst bei optimiertem Schmelzefluß bleibt die Wärmeformbeständigkeit erhalten.

Die erfindungsgemäßen thermoplastisch verarbeitbaren Polyurethane können als Spritzgußartikel, Faser, Beschichtungsmasse, besonders aber als Extrudat, verwendet werden. Bei Extrusionsprodukten, wie z.B. Folien, resultiert aus dem erfindungsgemäßen TPU ein verbesserter Schmelzefluß bei im wesentlichen gleichen sonstigen Eigenschaften.

In den folgenden Beispielen werden als Maß für den beschriebenen erfindungsgemäßen Schmelzefluß die Ergebnisse von Melt-Volume-Index-Messungen (MVI) in Abhängigkeit von der Temperatur angegeben. Die Wärmeformbeständigkeit der Proben wurde durch thermomechanische Analyse (TMA; Tangentenschnittverfahren) bestimmt.

### Beispiele

### Herstellung:

### Prepolymer-Verfahren

In einem Planschliffkolben mit Rührer und Rückflußkühler wird der Polyether Polytetrahydrofuran (Molgewicht ca. 2000) vorgelegt und bei 120°C 1 Stunde bei 14 mbar entwässert. Dann gibt man Dibutylzinndilaurat als Katalysator und Bis-(4-isocyanatphenyl)-methan (MDI) zu und rührt bei 120°C. Nach ca. 1 Stunde ist der jeweilige berechnete Gehalt an freien NCO-Gruppen erreicht. Man löst Ethylenbisstearylamid und Ionol in der Schmelze und fügt die entsprechende Menge an Kettenverlängerer zu. Nach kurzer Homogenisierung (ca. 1 min) gießt man die Reaktionsmischung auf Teflonpfannen aus und tempert ca. 12 Stunden bei 100°C nach. Einzelheiten zeigt Tabelle 1.

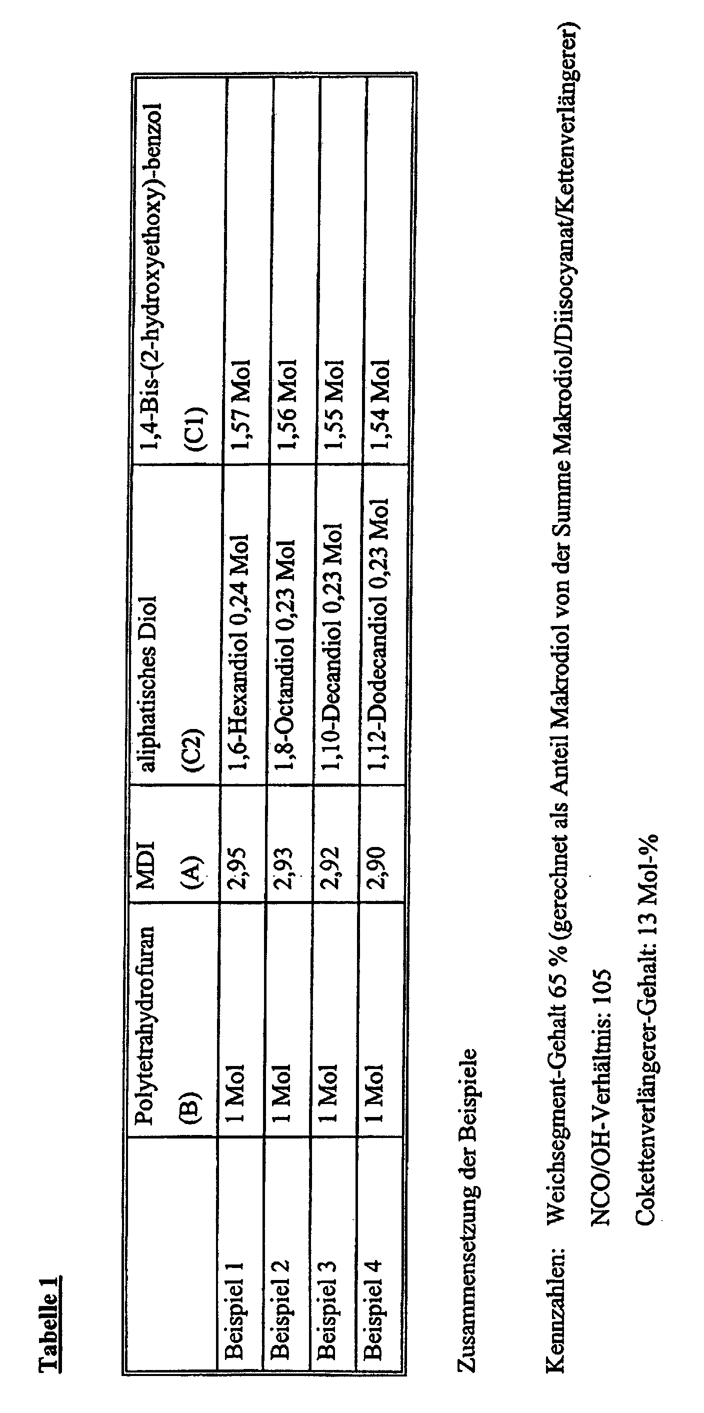

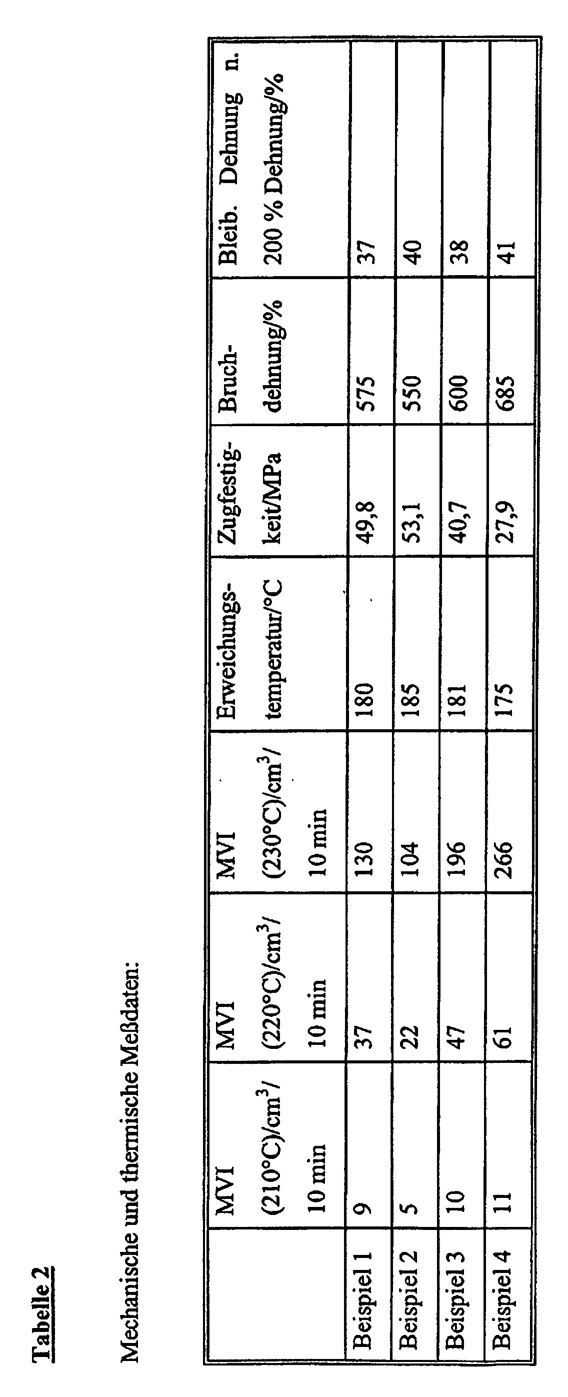

Man erkennt in den Beispielen die deutliche Abhängigkeit des Schmelzeflusses von der Kohlenstoffkette des Kettenverlängerers C2). Gleichzeitig erkennt man, daß die Zugfestigkeit bei optimal an den Kettenverlängerer C1) angepaßtem Kettenverlängerer C2) maximal wird. Weitgehend unabhängig von der Anpassung des Kettenverlängerer C1) und C2) verhalten sich Bruchdehnung, bleibende Dehnung und besonders bemerkenswert und überraschend die Wärmestandfestigkeit gemessen als Erweichungstemperatur in der thermomechanischen Analyse (TMA). Gerade die Kombination aus hoher Wärmestandfestigkeit und niedriger bleibender Dehnung mit der Möglichkeit der Einstellung des Schmelzeflusses zeichnet das erfindungsgemäße thermoplastische Polyurethan aus.

## Patentansprüche

1. Thermoplastische Polyurethanelastomere erhältlich durch Umsetzung von
A) Diisocyanaten
B) Polyhydroxyverbindungen und/oder Polyaminen mit
C) als Kettenverlängerungsmittel Mischungen von
C1) mit mindestens zwei Hydroxyalkyl-, Hydroxyalkoxy-, Aminoalkylund/oder Aminoalkoxyresten substituiertem Benzol, wobei die Reste gleich sind, und
C2) einem Alkandiol aus der Gruppe bestehend aus 1,4-Butandiol, 1,6-Hexandiol, 1,8-Octandiol, 1,10-Decandiol und 1,12-Dodecandiol im Molverhältnis C1 zu C2 von 60 zu 40 bis 95 zu 5,
wobei die Kombination von 1,4-Bis-(2-hydroxyethoxy)-benzol und 1,4-Butandiol ausgeschlossen sein soll.

2. Thermoplastische Polyurethanelastomere nach Anspruch 1, worin die substituierten Benzole C1) zwei gleiche Substituenten in 1,4-Stellung tragen und der Formel
X-Alk-W-Ph-W-Alk-X,
entsprechen, worin
X OH oder NH₂,
Alk einen Alkylenrest mit 1 bis 4 Kohlenstoffatomen,
W eine einfache chemische Bindung oder ein Sauerstoffatom und
Ph den Benzolring bedeuten.

3. Thermoplastische Polyurethanelastomere nach Anspruch 1, worin C1 1,4-Bis-(2-hydroxyethoxy)-benzol ist.

## Claims

1. Thermoplastic polyurethane elastomers obtainable by reaction of
A) diisocyanates
B) polyhydroxy compounds and/or polyamines with
C) as chain extenders mixtures of
C1) benzene substituted with at least two hydroxyalkyl, hydroxyalkoxy, aminoalkyl and/or aminoalkoxy residues wherein the residues are identical, and
C2) an alkanediol from the group consisting of 1,4-butanediol, 1,6-hexanediol, 1,8-octanediol, 1,10-decanediol and 1,12-dodecanediol in the molar ratio C1:C2 of 60:40-95:5,
wherein the combination of 1,4-bis(2-hydroxyethoxy)-benzene and 1,4-butanediol should be excluded.

2. Thermoplastic polyurethane elastomers according to claim 1, in which the substituted benzenes C1) bear two identical substituents in the 1 and 4 positions and are of the formula
X-Alk-W-Ph-W-Alk-X,
in which
X means OH or NH₂,
Alk means an alkylene residue with 1 to 4 carbon atoms,
W means a single chemical bond or an oxygen atom and
Ph means the benzene ring.

3. Thermoplastic polyurethane elastomers according to claim 1, in which C1 is 1,4-bis(2-hydroxyethoxy)-benzene.

## Revendications

1. Elastomères thermoplastiques en polyuréthanne, pouvant être obtenus par réaction de :
A) des diisocyanates,
B) des composés polyhydroxylés et/ou des polyamines, avec
C) comme agent d'allongement de chaine, des mélanges de :
C1) un benzène substitué par au moins deux restes hydroxyalcoyle, hydroxyalcoxy, aminoalcoyle et/ou aminoalcoxy, où les restes sont identiques, et
C2) un alcanediol du groupe consistant en le 1,4-butanediol, le 1,6-hexanediol, le 1,8-octanediol, le 1-10-décanediol et le 1,12-dodécanediol en un rapport molaire C1 sur C2 allant de 60 sur 40 à 95 sur 5,
où la combinaison du 1,4-bis(2-hydroxyéthoxy)-benzène et du 1,4-butanediol doit être exclue.

2. Elastomères thermoplastiques en polyuréthanne suivant la revendication 1, dans lesquels le benzène substitué C1) porte deux substituants identiques en position 1,4 et correspond à la formule :
X - Alc - W - Ph - W - Alc - X
où
X représente OH ou NH₂ ;
Alc représente un reste alcoylène ayant 1 à 4 atomes de carbone ;
W représente une liaison chimique simple ou l'atome d'oxygène, et
Ph représente le cycle benzénique.

3. Elastomères thermoplastiques en polyuréthanne suivant la revendication 1, dans lesquels C1 est le 1,4-bis(2-hydroxyéthoxy)benzène.
